## Europäisches Patentamt
## European Patent Office
## Office européen des brevets

(19)

(11) Publication number: **0 222 362**
**B1**

(12)

# EUROPEAN PATENT SPECIFICATION

(45) Date of publication of the patent specification:
**09.05.90**

(51) Int. Cl.⁵: **H02K 41/035**

(21) Application number: **86115615.6**

(22) Date of filing: **11.11.86**

(54) **Linear motor.**

(30) Priority: **13.11.85 JP 255790/85**
**30.04.86 JP 102993/86**

(43) Date of publication of application:
**20.05.87 Bulletin 87/21**

(45) Publication of the grant of the patent:
**09.05.90 Bulletin 90/19**

(84) Designated Contracting States:
**DE FR GB IT**

(56) References cited:
**WO-A-83/01872**
**DE-A- 2 360 973**
**DE-A- 2 908 413**
**GB-A- 2 117 163**
**US-A- 3 896 319**
**US-A- 4 415 941**

**PATENT ABSTRACTS OF JAPAN, vol. 8, no. 4 (E-220)**
**(1441), 10th January 1984; & JP-A-58170354**
**IBM TECHNICAL DISCLOSURE BULLETIN,**
**vol. 26 no. 3B, August 1983, pages 1664-1665, W.E.**
**BEUCH: "Resilient ring for isolating a motor with**
**respect to a support frame"**

(73) Proprietor: **SHARP KABUSHIKI KAISHA,**
**22-22 Nagaike-cho Abeno-ku, Osaka 545(JP)**

(72) Inventor: **Hyuga, Takao, 60-2, Tonoshiro, Kizu-cho,**
**Soraku-gun Kyoto-fu(JP)**
Inventor: **Ueda, Kazuhiko, 1-7-402, Kataoka-dai 3-chome**
**Kanmaki-cho, Kitakatsuragi-gun Nara-ken(JP)**

(74) Representative: **Selting, Günther, Dipl.-Ing. et al,**
**Deichmannhaus am Hauptbahnhof, D-5000 Köln 1(DE)**

## Description

The present invention relates to a linear motor according to the preamble of claim 1 and more particularly, to a linear motor for magneto-optical disk drive or the like.

Such a linear motor is known from IBM Technical Disclosure Bulletin, vol. 26, no. 3B, August 1983, pages 1664–1665. This known linear motor is provided with a movable member guided at guide means mounted on a base. Between the stationary part of the motor and the base there is arranged a layer of resilient material in order to reduce transmission of vibrations between the stationary part of the motor and the base. These vibrations occur due to reaction forces applied from the movable member of the linear motor through the stationary part to the base upon acelleration of the movable member. The resilient layer could merely damp transmission of vibrations so that the base still vibrates and, therefore, via the guide means the movable member vibrates. Allthough in the known linear motor transmission of vibrations are damped by means of the resilient layer, a bending moment is generated in the base due to reversly applying to the base the reaction forces against the driving force applied to the movable member. Therefore, a resonance mode of torsion or bending appears in the base and thus, the movable member is adversely affected by vibrations of the resonance mode of the base. As a result, gain margin and phase margin of the movable member are decreased and thus, when using the linear motor in a magneto-optical disk drive or the like, stable recording, reproducing and erasing operations cannot be performed.

It is the object of the invention, to provide a linear motor in which no vibrations are applied to the movable member upon moving it.

This object is solved according to the invention in the linear motor with the features mentioned in claim 1. A preferred embodiment of the invention is characterized by the features of claim 2.

According to the invention the height of the neutral plane of the base coincides with the height of the line of action of the reaction force applied from the driving yoke for driving the movable member to said base against an electromagneto force produced between the coil of the movable member and the driving yoke. The term "neutral plane" is intented as a technical term used generally in strength of materials and means a plane free from tension and compression, which is disposed between a tensed plane and a compressed plane when, for example a plate member has been bent.

The linear motor according to the invention employs no resilient layer for damping vibrations due to the height of the line of action of the reaction force applied from the driving yoke, i.e. the stationary part of the motor, to the base being equal to the height of the neutral plane of the base, the movable member is not subjected to vibrations of the resonance mode of the base. Therefore, expected characteristics of the movable member are obtained and thus, stable recording, reproducing and arising operations are performed by the linear motor in a magneto-optical disk drive or the like.

The features of the present invention will become apparent from the following description taken in conjunction with a preferred embodiment thereof with reference to the accompanying drawings, in which:

Fig. 1 is a top plan view of a linear motor according to the present invention,

Fig. 2 is a sectional view taken along the line VI–VI in Fig. 1, and

Fig. 3 is a sectional view taken along the line VII–VII in Fig. 1

Before the description of the present invention proceeds, it is to be noted that like parts are designated by like reference numerals throughout several views of the accompanying drawings.

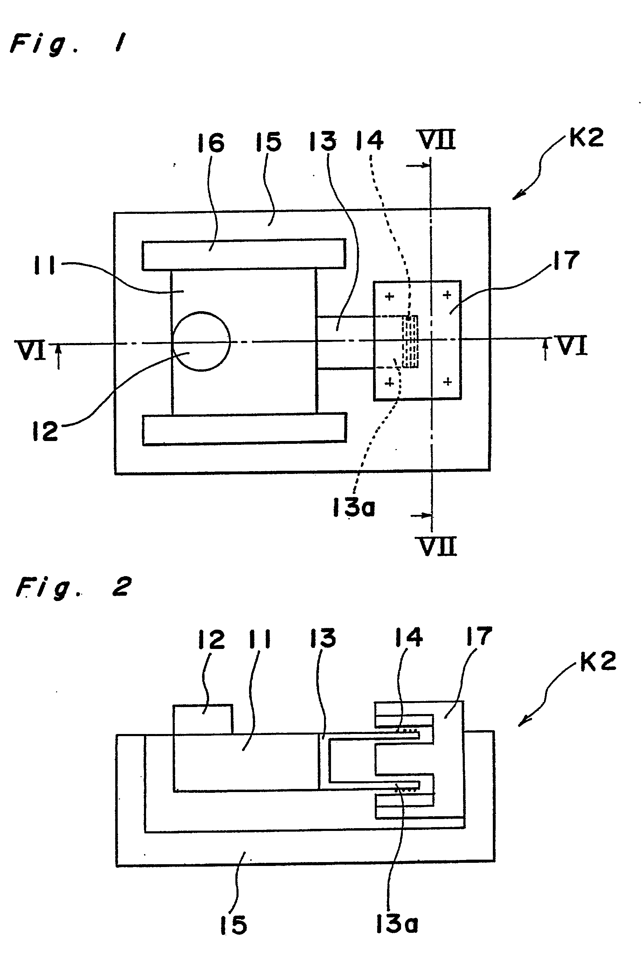

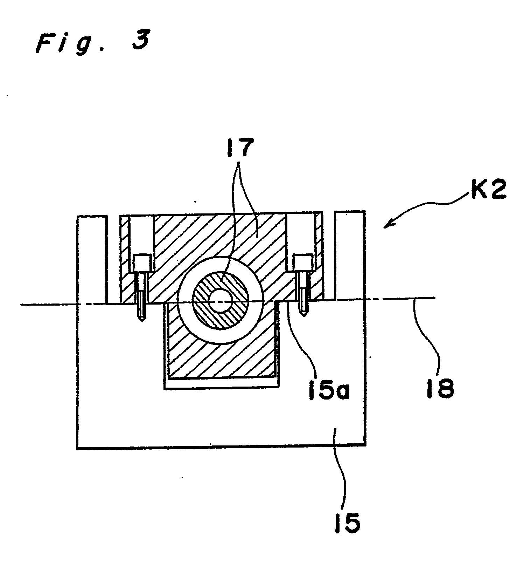

Referring to Figs. 1 to 3, there is shown a linear motor K2 according to the present invention. A head 12, for example, an optical head is fixedly mounted on a movable portion 11 shown in Fig. 1. The optical head is used for recording, reproducing and erasing information of an information storage medium (not shown), e.g. an optical magnetic disk by using laser beams. An actuating member 13 is secured to the movable portion 11. An end portion 13a of the actuating member 13 is inserted into a magnetic gap defined by a driving yoke 17 of magnetic material. The driving yoke 17 is fixed to a mounting face 15a of a base 15. The base 15 has a neutral plane 18 identical, in height, with the mounting face 15a.

It is to be noted here that the term "neutral plane" is intended as a technical term used generally in strength of materials and means a plane free from tension and compression, which is disposed between a tensed plane and a compressed plane when, for example, a plate member has been bent. In the base 15 of the present invention, a neutral plane extending in the horizontal direction is taken into consideration. It is needless to say that the base 15 has a neutral plane also in the vertical direction. However, since bending and torsion in the horizontal direction is excessively small to a negligible degree as compared with those in the vertical direction, it is not necessary to consider the neutral plane present in the vertical direction.

In the above described arrangement of the linear motor K2, when a coil 14 wound around the end portion 13a of the actuating member 13 has been energized, a driving force is applied to the movable portion 11 by electromagnetic action between the coil 14 and the driving yoke 17. Simultaneously at this time, a reaction force acting as a reaction against the driving force is applied from the mounting face 15a to the base 15. Since the mounting face 15a coincides, in height, with the neutral plane 18, a resonance mode of the base 15, which might be caused by the reaction force applied to the base 15 against the driving force, is not produced.

On the other hand, conventionally, the resonance mode of the base 15 has been caused. Namely, since no consideration has been given to the height of the mounting face 15a and the neutral plane 18 of the base 15, the resonance mode of the base 15 resulting from the reaction force applied to the base 15 against the driving force is produced. Hence, a pair of guides 16 for guiding the movable portion 11, which is mounted on the base 15, are vibrated by the resonance of the base 15 and therefore, vibrate the movable portion 11. As a result, the head 12 fixedly mounted on the movable portion 11 is also vibrated by the guides 16 and thus, it has been impossible to perform stable recording, reproducing and erasing operations.

However, in accordance with the present invention, since the resonance mode of the base 15 can be prevented, guides 16 are not vibrated by the base 15 and thus, it becomes possible to perform stable recording, reproducing and erasing operations.

As will be seen from the description given so far, in the linear motor K2 of the present invention, since the height of the neutral plane 18 of the base 15 and the height of the point of application of the reaction force applied to the base 15 against the driving force are so set as to coincide with each other, the resonance mode of the base 15 resulting from the reaction force against the driving force is prevented. As a result, it becomes possible to perform stable recording, reproducing and erasing operations by using the head 12 mounted on the movable portion 11.

Although the present invention has been fully described by way of example with reference to the accompanying drawings, it is to be noted here that various changes and modifications will be apparent to those skilled in the art. Therefore, unless otherwise such changes and modifications depart from the scope of the appended claims, they should be construed as being included therein.

## Claims

1. Linear motor comprising a movable member (11), a guide means (16) for guiding said movable member (11), a coil (14) provided at said movable member (11), a base (15) on which said guide means (16) are mounted and a driving yoke (17) mounted on said base (15) such that said movable member (11) is driven in a predetermined rectilinear direction, characterized in that a height of a neutral plane (18) of said base (15) is set so as to coincide with a height of a line of action of a reaction force applied from said driving yoke (17) to said base (15) against an electromagnetic force produced between said coil (14) and said driving yoke (17).

2. A linear motor as claimed in Claim 1, characterized in that an actuating member (13) is mounted on said movable member (11) such that the electromagnetic force is applied to said movable member (11) through said actuating member (13).

## Patentansprüche

1. Linearmotor mit einem bewegbaren Teil (11), Führungsvorrichtungen (16) zum Führen des bewegbaren Teils (11), einer an dem bewegbaren Teil (11) angebrachten Spule (14), einer Basis (15), auf der die Führungsvorrichtungen (16) befestigt sind und einem Antriebsjoch (17), das auf der Basis (15) derart befestigt ist, daß das bewegbare Teil (11) in einer vorbestimmten geradlinigen Richtung angetrieben wird, dadurch gekennzeichnet, daß die Höhe einer neutralen Ebene (18) der Basis (15) derart eingestellt ist, daß sie mit der Höhe der Wirkungslinie einer Reaktionskraft zusammenfällt, die von dem Antriebsjoch (17) auf die Basis (15) entgegen einer elektromagnetischen Kraft aufgebracht wird, die zwischen der Spule (14) und dem Antriebsjoch (17) erzeugt wird.

2. Linearmotor nach Anspruch 1, dadurch gekennzeichnet, daß ein Betätigungsteil (13) an dem bewegbaren Teil (11) derart befestigt ist, daß die elektromagnetische Kraft durch das Betätigungsteil (13) auf das bewegbare Teil (11) aufgebracht wird.

## Revendications

1. Moteur linéaire comprenant un organe mobile (11), un moyen de guidage (16) servant à guider ledit organe mobile (11), un bobinage (14) prévu sur ledit organe mobile (11), une embase (15) sur laquelle ledit moyen de guidage (16) est monté, et une culasse motrice (17) montée sur ladite embase (15) de manière que ledit organe mobile (11) soit entraîné dans une direction rectilinéaire prédéterminée, caractérisé en ce que la hauteur du plan neutre (18) de ladite embase (15) est calculée de manière à coïncider avec la hauteur de la ligne d'action d'une force de réaction appliquée par ladite culasse motrice (17) à ladite embase (15), à l'opposé d'une force électro-magnétique produite entre ledit bobinage (14) et ladite culasse d'entraînement (17).

2. Moteur linéaire selon la revendication 1, caractérisé en ce qu'un organe d'actionnement (13) est monté sur ledit organe mobile (11) de telle manière que la force électrique soit appliquée audit organe mobile (11) par l'intermédiaire dudit organe d'actionnement (13).

Fig. 1

Fig. 2

*Fig. 3*